# FASCICULE DE BREVET EUROPEEN

(11) **EP 0 451 181 B1**
(45) Date de publication et mention de la délivrance du brevet: **11.09.1996**
(21) Numéro de dépôt: 90900885.6
(22) Date de dépôt: 27.12.1989
(51) Int. Cl.: C04B 35/66, C04B 35/00, B22C 1/22, B22C 1/24

(54) **COMPOSITION REFRACTAIRE PRETE AU DURCISSEMENT ET SA PREPARATION**
FEUERFESTE ZUBEREITUNG, FERTIG ZUM HÄRTEN UND ZUBEREITUNG
REFRACTORY COMPOSITION READY FOR HARDENING AND ITS PREPARATION

(30) Priorité: 28.12.1988 FR 8817348
(43) Date de publication de la demande: 16.10.1991
(73) Titulaire: SOCIETE D'APPLICATIONS DE PROCEDES INDUSTRIELS ET CHIMIQUES S.A.P.I.C., F-92270 Bois-Colombes (FR)
(72) Inventeur: RICHARD, Gérard, F-60520 La Chapelle-en-Serval (FR)
(74) Mandataire: Degret, Jacques
(86) Numéro de dépôt international: FR8900682
(87) Numéro de publication internationale: WO9007477

(56) Documents cités:
- EP-A- 0 220 491
- EP-A- 0 269 788
- US-A- 4 765 950
- WPI Data Base, Acc No: 85-113467/19, & JP, A, 60054967 (Nippon Synth Chem Ind) 29 Mars 1985

## Description

La présente invention est relative à une composition réfractaire, prête au durcissement à froid ou à chaud, du type comprenant : a) une charge de grains minéraux réfractaires à hautes caractéristiques mécaniques, par exemple de silice, d'alumine, de carbone, b) au moins un liant primaire ou principal, de type thermodurcissable, ou de type argile ou de type silicate pour agglomérer entre eux les grains de ladite charge, approprié en conséquence à ladite charge, et c) au moins un liant secondaire destiné à améliorer et/ou à corriger les défauts du liant primaire, ladite composition étant notamment destinée à la fabrication de moules et de noyaux pour la fonderie, à la fabrication de briques et de pisés et à la fabrication de masses de bouchage pour trous de coulée de hauts fourneaux.

D'une manière générale, les compositions réfractaires visées par la présente invention concernent tous les domaines dans lesquels un produit réfractaire doit être moulé et présenter des caractéristiques mécaniques temporaires ou permanentes.

En fonderie, pour la fabrication de moules et de noyaux, la première des deux techniques actuelles les plus répandues consiste à utiliser en mélange une charge réfractaire en grains (par exemple de silice, chamotte, zircon, chromite) associée en faible proportion, généralement entre 0,7 et 2 % du poids de la charge, pour l'agglomération entre eux des grains de ladite charge, à au moins un liant primaire ou principal choisi parmi les résines thermodurcissables qui sont polymérisables soit à chaud, soit à froid, et dans ce dernier cas à l'aide d'un durcisseur ou d'un catalyseur, liquide ou gazeux, introduit dans la composition à l'instant de son durcissement.

La seconde des deux techniques les plus répandues, similaire à la première technique précitée quant à sa mise en oeuvre, consiste à utiliser un silicate alcalin ou une argile naturelle ou synthétique à titre de liant primaire ou principal.

Après durcissement, c'est-à-dire après réticulation de la substance liante qui agglomère entre eux les grains de la charge, on obtient par l'une et l'autre techniques des moules et des noyaux qui ont de bonnes caractéristiques mécaniques et qui reproduisent fidèlement les empreintes de leurs modèles.

Lors de la coulée ultérieure du métal, acier, fonte, et métaux non ferreux, ces moules ou noyaux se désagrègent par destruction du liant et, ainsi, ils libèrent la pièce métallique aux formes désirées.

Cependant, bien qu'utilisées depuis de nombreuses années, toutes ces techniques continuent à accuser leurs limites malgré les améliorations apportées, et il est souvent nécessaire d'avoir recours à des artifices pour obtenir des pièces coulées convenables.

Ainsi, pour la coulée de pièces en acier, il est souvent nécessaire d'évider les noyaux afin de prévenir les criques, c'est-à-dire les fentes, craquelures superficielles ou profondes et autres ouvertures, qui se forment lors du refroidissement, lorsque le métal ne parvient pas à faire complètement son retrait ; en effet, en étant trop résistant à chaud par manque de plasticité, et trop lent à se désagréger, le noyau provoque des contraintes dans le métal en cours de refroidissement, d'où l'apparition de ces imperfections que l'on dénomme criques.

Pour la coulée de pièces, notamment en fonte, acier et cupro-alliage, il est quasiment obligatoire de passer sur les surfaces des moules et des noyaux qui seront en contact avec le métal coulé au moins une couche d'un enduit réfractaire qui apporte ses propres propriétés décapantes et qui permet d'obtenir des pièces présentant une qualité de surface satisfaisante.

Pour pallier ces inconvénients, il a été proposé d'ajouter à la composition de la charge granuleuse et du liant des agents de pontage tels les silanes qui améliorent l'adhérence du liant sur les grains de la charge. L'avantage des silanes est qu'ils permettent d'obtenir des moules et des noyaux de fonderie présentant de bonnes caractéristiques mécaniques, et qu'ils permettent subsidiairement de diminuer la quantité de liant relativement à la quantité de charge ; malheureusement, l'introduction de silanes se fait au détriment de la teneur en certaines matières actives indispensables, ainsi qu'au détriment de la souplesse de la structure des moules et des noyaux lorsqu'ils sont en contact avec la chaleur.

Dans le domaine des briques et des pisés réfractaires, fabriqués à partir d'alumine, de silice, de carbone, de magnésie, de nitrures, et de tous autres produits sans plasticité (tels que le corindon, la stéatite, la bauxite, la sillimanite, la chromite, le carbure de calcium), ces matières premières étant le plus généralement agglomérées à l'aide de silicates (de soude, de magnésie ou d'éthyle) ou de chaux, l'eau présente en proportions toujours importantes dans lesdites matières premières et dans leurs liants minéraux rend le séchage des briques et des pisés particulièrement long et délicat sous peine de voir apparaître des déformations et des craquelures gravement nuisibles aux caractéristiques isolantes recherchées.

Dans le domaine des masses de bouchage pour trous de coulée de hauts fourneaux, la technique traditionnelle utilise des masses réfractaires tels l'alumine, le sable, le carbure de silicium et le carbone, mélangés à du goudron de houille à environ 25 % en poids relativement à la masse réfractaire, goudron de houille qui constitue un liant donnant généralement satisfaction au plan de l'agglomération des grains de la charge. Malheureusement, le goudron de houille dégage des quantités considérables de fumée lorsque de telles compositions réfractaires sont portées à haute température. Or ces fumées sont désagréables pour le personnel, mais aussi et surtout elles sont toxiques et cancérigènes, et par suite l'interdiction d'utiliser le goudron de houille aux fins précitées a déjà été ordonnée dans certains pays.

Compte tenu des inconvénients que le goudron de houille présente, il a déjà été proposé de le remplacer par d'autres liants choisis notamment parmi les résines synthétiques thermodurcissables ; ainsi, les brevets US-A-2.709.659, US-A-2.938.807 et US-A-3.007.805 proposent de substituer une résine de type phénol-formaldéhyde ou phénol-formol au goudron de houille et les brevets FR-A-2.232.596 et FR-A-2.353.642 proposent de substituer une résine du type furane ou furanique à ce même goudron de houille.

Toutefois, ces liants organiques ont leurs propres inconvénients : ils ne permettent pas d'agglomérer correctement les grains de la masse réfractaire ; leur utilisation impose des pourcentages d'emploi très élevés, de l'ordre de 12 à 15 % en poids de la charge granuleuse à agglomérer ; ils nécessitent l'addition simultanée à la charge de leurs solvants, avec lesquels on introduit bien évidemment des matières volatiles, généralement nocives, qui se dégagent au contact de la chaleur.

Les compositions réfractaires destinées à la fabrication des masses de bouchage demeurent donc peu économiques et en outre, quel que soit le liant utilisé, elles dégagent toujours des fumées, chargées et souvent toxiques, lors de leur utilisation : l'usage de telles compositions réfractaires est donc limité.

L'introduction de silanes en remplacement d'une partie des liants synthétiques, telles la résine phénol-formaldéhyde ou la résine furane, ne s'est révélée d'aucune efficacité dans le domaine de la fabrication des masses de bouchage, et en pratique les pourcentages de liants synthétiques restent au minimum de 12 à 15 % en poids relativement à la charge granuleuse à agglomérer.

Dans tous les domaines d'activité précités utilisant une charge de grains minéraux réfractaires et au moins un liant pour agglomérer entre eux les grains de ladite charge, il est alors constant que deux limites empêchent d'utiliser les quantités optimales de liants ou les quantités optimales d'un mélange de plusieurs liants :
- la pollution, proportionnelle à la quantité de liant(s) utilisé(s), et
- le coût élevé des liants, qui conduit également les industriels à les utiliser en quantités aussi faibles que possibles.

Dans ces circonstances, il est alors évident que les liants ne donnent jamais leurs caractéristiques de manière optimale. S'ils sont utilisés en très faibles pourcentages, les liants ne parviennent à l'évidence jamais à enrober complètement et uniformément les charges granuleuses que l'on désire agglomérer. A titre d'exemple, on sait qu'un sable siliceux utilisé de manière classique en fonderie présente une surface spécifique de l'ordre de 13 m²/kg, et que cette surface doit être enrobée avec seulement 7 à 20 g de résine ; autrement dit, le pouvoir couvrant du liant doit être de 650 à 1850 m²/kg, ce qui est sans commune mesure comparativement au pouvoir couvrant d'une peinture.

Il a donc été proposé d'associer aux substances liantes des agents mouillants capables d'abaisser suffisamment la tension superficielle des liants, pour faire en sorte que lesdits liants apportent régulièrement toutes leurs qualités adhésives. Malheureusement, tous les essais effectués en ce sens ont été décevants, et seul le silane cité plus haut se révèle être une solution valable, sinon sur le plan technique, du moins sur le plan économique.

L'addition d'un liant secondaire en plus du liant primaire ou principal à la charge granuleuse à agglomérer s'est également révélée être sans intérêt car la structure rigide du liant primaire reste prédominante et le manque de souplesse à chaud persiste, d'où l'apparition de criques si la composition précitée est utilisée en fonderie. En outre, le liant primaire et le liant secondaire ne présentent aucune compatibilité particulière l'un vers l'autre, et leur mélange est donc hétérogène.

La présente invention se propose de pallier, par un moyen commun aux caractéristiques originales, les inconvénients exposés ci-dessus à propos des techniques d'agglomération des compositions réfractaires utilisées : en fonderie, pour la fabrication de masses de bouchage pour trous de coulée de hauts fourneaux, pour la fabrication de briques et de pisés, et d'une manière générale dans toute industrie utilisant une matière réfractaire dont l'agglomération implique l'emploi d'au moins un liant thermodurcissable à effet temporaire ou permanent.

Les expériences consistant à associer le liant à un agent tensio-actif pur et simple n'ayant conduit à aucun résultat probant, le déposant de la présente demande de brevet a orienté ses recherches dans l'association du liant primaire ou principal, adapté à l'application désirée, à un liant secondaire ou complémentaire, apte à former un film, tout en cherchant à modifier ledit liant secondaire afin de lui donner un pouvoir mouillant optimal.

On conçoit en effet que si l'additif de mouillage, au lieu d'être un simple agent tensio-actif, est remplacé par un nouveau produit possèdant en même temps des propriétés liantes qui lui sont propres et des propriétés de mouillage et filmogènes spécifiques, le résultat doit être notablement amélioré. En outre, cette amélioration doit être d'autant plus importante que, en utilisant un agent autre qu'un simple tensio-actif, on n'est plus limité par le pourcentage d'incorporation très faible propre aux simples agents tensio-actifs.

Les recherches du déposant se sont donc orientées vers la conception d'un nouveau produit dit "liant secondaire modifié" qui, s'il est correctement choisi, cumule :
a) un effet liant et filmogène, aux propriétés complémentaires de celles du liant primaire de type thermodurcissable, ou de type argile ou de type silicate et par suite adapté à l'application désirée comme l'est déjà ledit liant primaire,
b) des qualités émulsifiantes telles qu'elles permettent une excellente compatibilité avec ledit liant primaire,
c) des propriétés spécifiques de mouillage telles que le liant secondaire et ledit liant primaire, alors intimement associés, enrobent parfaitement la charge de grains à agglomérer.

En apportant, grâce à un tel liant secondaire modifié, des changements et une complémentarité aux caractéristiques des liants primaires, il devient ainsi possible de pallier les défauts desdits liants primaires et de parvenir à un résultat final techniquement très supérieur, tout en ne perdant pas de vue les données économiques. En effet, le conjugaison des trois propriétés exposées ci-dessus conduit à utiliser des quantités globales de liant (liant primaire + liant secondaire) très nettement inférieures à celles qui seraient nécessaires si le liant secondaire n'avait pas été modifié.

En outre, puisque les propriétés mouillantes et émulsifiantes du liant secondaire autorisent une réduction très sensible des quantités de produits utilisées, le corollaire de cette réduction est qu'il est alors permis de réaliser, prêtes au durcissement, des compositions réfractaires à très faible teneur en matières volatiles : les risques de pollution sont alors quasiment inexistants pour autant que l'on choisisse correctement tous les composants de base, notamment le ou les liants primaires et le ou les liants secondaires.

La présente invention a donc pour premier objet une composition réfractaire, prête au durcissement à froid ou à chaud, du type comprenant : a) une charge de grains minéraux réfractaires à hautes caractéristiques mécaniques, par exemple de silice, d'alumine, de carbone, b) au moins un liant primaire ou principal, de type thermodurcissable, ou de type argile ou de type silicate, pour agglomérer entre eux les grains de ladite charge, approprié en conséquence à ladite charge, et c) au moins un liant secondaire destiné à améliorer et/ou à corriger les défauts du liant primaire, ladite composition étant notamment destinée à la fabrication de moules et de noyaux pour la fonderie, à la fabrication de briques et de pisés et à la fabrication de masses de bouchage pour trous de coulée de hauts fourneaux, et étant caractérisée en ce que le liant secondaire est obtenu par saponification d'un produit carboné présentant un indice d'acide suffisant pour être modifiable par saponification, ledit liant secondaire, par ses propriétés émulsifiantes propres, étant ainsi rendu compatible avec le liant primaire.

Eventuellement, la saponification est précédée d'une estérification si elle n'est pas suffisamment réalisable directement.

La présente invention a pour deuxième objet un liant composite formé d'au moins un liant primaire thermodurcissable ou de type argile ou de type silicate, approprié à la charge à agglomérer et d'au moins un liant secondaire répondant à la caractéristique précitée. Le liant secondaire apporte ainsi au liant principal ses propres propriétés liantes et filmogènes. En outre, le liant secondaire ainsi défini apporte, grâce à ses propriétés émulsifiantes propres, une grande compatibilité avec de nombreux liants primaires, laquelle n'existerait pas sans saponification, permettant ainsi la réalisation de liants composites homogènes.

Avantageusement, la présente invention a donc pour troisième objet un procédé de fabrication d'un liant composite, caractérisé en ce que le produit carboné modifiable par saponification, constituant après saponification le liant secondaire, est utilisé en substitution totale ou partielle de l'agent de condensation normalement utilisé dans l'élaboration d'une résine de condensation alcaline destinée à constituer le liant primaire, et conduisant ainsi à la création d'un type nouveau de liant hybride mais homogène, aux caractéristiques nouvelles et aux propriétés mouillantes améliorées.

Enfin, la présente invention a pour quatrième objet un procédé de préparation, en vue de son durcissement, d'une composition réfractaire du type comprenant : a) une charge de grains minéraux réfractaires à hautes caractéristiques mécaniques, par exemple de silice, d'alumine, de carbone, b) au moins un liant primaire ou principal, de type thermodurcissable, ou de type argile ou de type silicate, approprié à l'agglomération des grains de la charge en question, et c) au moins un liant secondaire destiné à améliorer et/ou à corriger les défauts du liant primaire, ladite composition étant notamment destinée à la fabrication de moules et de noyaux pour la fonderie, à la fabrication de briques et de pisés et à la fabrication de masses de bouchage pour trous de coulée de hauts fourneaux, ledit procédé étant caractérisé en ce que l'on ajoute, soit à la masse de la charge et du liant primaire, avant durcissement de la charge, soit au liant primaire avant son mélangeage à la charge, soit à la charge avant ou pendant l'incorporation du liant primaire, un liant secondaire obtenu par saponification d'un produit carboné présentant un indice d'acide suffisant pour être modifiable par saponification, ledit liant secondaire, par ses propriétés émulsifiantes propres, étant ainsi rendu compatible avec le liant primaire de type thermodurcissable, ou de type argile ou de type silicate.

Compte tenu des particularités qu'il doit présenter, le produit carboné, qui après saponification constitue le liant secondaire, est choisi parmi la gamme étendue des produits naturels et synthétiques susceptibles à la fois :
- à l'état naturel, de montrer des propriétés filmogènes et des qualités agglomérantes, à froid ou à chaud selon les utilisations, et
- à l'état modifié par saponification, de posséder des propriétés tensio-actives destinées à améliorer le mouillage des charges réfractaires à agglomérer, et des propriétés émulsifiantes telles qu'il soit le plus complètement possible compatible avec le liant de base de type thermodurcissable, ou de type argile ou de type silicate.

Selon les objectifs de la présente invention, il est possible de citer à titre d'exemples non limitatifs de produits carbonés saponifiables:
1) les résines naturelles (notamment les colophanes, les brais et les gommes) et les résines synthétiques qui ont des propriétés liantes et filmogènes, et qui, modifiées par réaction avec une base minérale ou organique, donnent des savons économiques présentant les pouvoirs mouillant et émulsifiant recherchés,
2) les huiles végétales siccatives et semi-siccatives et leurs acides gras (coton, lin, maïs, oiticica, pépins de raisin, périlla, ricin, sésame, soja, tournesol, tung par exemple), ainsi que les huiles de poisson (hareng, sardine par exemple) qui, modifiées par saponification, elle-même éventuellement précédée d'une estérification, offrent toute une gamme de compatibilités et ont toujours des qualités mouillantes et émulsifiantes remarquables,
3) les huiles synthétiques (par exemple huiles de pétrole aromatiques obtenues par polymérisation catalytique de fractions pétrolières, talloils et leurs acides gras obtenus comme sous-produits de la fabrication de la pâte à papier) et dont aussi bien les acides gras que les acides résiniques peuvent être saponifiés, et éventuellement être préalablement estérifiés, afin de donner des liants secondaires aux propriétés mouillantes et émulsifiantes souhaitées.

Avantageusement, l'indice d'acide du produit carboné modifiable par saponification est compris entre 40 et 300. Cette valeur d'indice d'acide est celle du produit carboné de base, c'est-à-dire avant l'éventuelle estérification à laquelle sera soumise ledit produit si la saponification n'est pas suffisamment réalisable directement.

En outre, en poids, le liant secondaire constitue de préférence entre 10 et 60 % du liant composite (primaire(s) + secondaire(s)).

Pour mieux faire comprendre les objets de la présente invention, on va décrire ci-après, à titre d'exemples purement illustratifs et non limitatifs, diverses compositions permettant la fabrication de moules et de noyaux pour la fonderie et/ou la fabrication de briques et de pisés et/ou la fabrication de masses de bouchage pour trous de coulée de hauts fourneaux.

Toutes ces industries préconisent et disposent en effet sensiblement du même arsenal de liants de type thermodurcissables, ou de type argile ou de type silicate utilisés à titre principal, ces liants, naturels ou synthétiques, étant minéraux (argiles crues ou activées, silicates alcalins par exemple) ou organiques (par exemple acides gras, acryliques, - alkydes, aminoplastes, coumarone, dérivés d'hydrocarbures, époxy, furanes, huiles végétales, indène, phénoplastes, polyesters, polyuréthanes, résines naturelles).

Dans les trois applications principalement concernées, le liant secondaire associé au liant primaire conformément à l'invention pourra être incorporé en supplément ou en remplacement d'une partie dudit liant primaire. Toutefois, le plus avantageusement, le liant secondaire sera utilisé en remplacement d'une partie du liant primaire, et ce d'autant qu'en mettant en oeuvre l'invention il est aisé de prévoir une quantité de liant composite (primaire + secondaire) inférieure à la quantité du même liant primaire qu'il est nécessaire d'incorporer en appliquant les techniques traditionnelles (notamment pour la fabrication des masses de bouchage et pour la fabrication des briques et des pisés).

En préliminaire des exemples d'applications donnés ci-après de la présente invention, il est rappelé que dans un domaine voisin de ceux qui sont intéressés par la présente invention, à savoir le domaine du moulage des céramiques, il est connu d'utiliser des liants thermoplastiques, tels un alcool polyvinylique (PVA) et un copolymère d'acétate de vinyle et d'éthylène (EVA). Ces liants thermoplastiques s'utilisent en milieu nécessairement aqueux pour permettre ensuite le développement des propriétés des matières céramiques.

Les documents EP-A-0.220.491 et JP-A-54.967/1985 se rapportent à de tels liants thermoplastiques.

Dans le but d'obtenir une pâte céramique plus facilement moulable, il est aussi connu de saponifier une partie (généralement entre 20 % et 90 %) de ces liants thermoplastiques.

Toutefois, à la différence de la technique de saponification préconisée par la présente invention, il est à noter que :
a) dans le domaine voisin du moulage des céramiques, domaine où aucun problème de mise en forme de la masse céramique ne se pose, le liant thermoplastique ainsi saponifié n'est que temporaire ; en effet, le liant doit pouvoir se ramollir à une température inférieure à 130°C, et en tout état de cause à une température qui n'est jamais supérieure à 160°C, et au surplus ledit liant est appelé à se décomposer rapidement, à température relativement basse. de l'ordre de 200°C, et sans laisser de résidus carbonés ;
b) tandis que dans les trois domaines d'application visés par la présente invention, où au contraire se posent les problèmes de mise en forme des masses et de très bonne tenue de ces masses à chaud, le liant composite formé d'un liant primaire de type thermodurcissable, ou de type argile ou de type silicate et d'un liant secondaire saponifié laisse une structure carbonée, d'ailleurs hautement désirable dans toutes les applications et notamment pour la fabrication de masses de bouchage pour trous de coulée de hauts fourneaux ; de plus, ce liant composite ne doit surtout pas avoir de phase de ramollissement, et il ne doit surtout pas disparaître, du moins pas tant que la charge réfractaire n'a pas été agglomérée.

Comme autre différence, il est à noter que le liant thermoplastique saponifié utilisé dans le moulage des céramiques est très soluble dans l'eau et qu'il s'emploie en milieu nécessairement aqueux, en présence d'une quantité d'eau non négligeable, pour pouvoir ensuite développer les propriétés desdites matières céramiques, alors qu'à l'inverse le liant de type thermodurcissable, ou de type argile ou de type silicate selon la présente invention s'utilise en milieu anhydre, ou en présence de seulement quelques traces d'eau puisque celle-ci est un poison qui, en réagissant avec le métal coulé en fusion, provoque toujours des défauts de surface et provoque aussi dans quelques cas des explosions

Dans les premiers exemples d'application donnés ci-après dans le domaine de la fonderie, il est à noter que tous les essais ont été réalisés avec un sable extrasiliceux d'indice de finesse AFS 55/60. Dans ces exemples, le liant composite pourra être mélangé à la charge en quantité de l'ordre de :
- 0,6 à 1,2 % du poids de la charge pour les exemples 1 et 2,
- 0,8 à 1,4 % du poids de la charge pour les exemples 3 à 7,
- 2,5 à 5 % pour l'exemple 8,
- 0,8 à 1,3 % pour l'exemple 9.

### Exemple 1 :

En fonderie, pour la coulée de pièces d'acier, on sait que les liants les plus répandus, à savoir les résines de type furane (ou furanique) ou phénolique, ne donnent pas complète satisfaction, ni sur le plan de l'aspect des pièces (réaction moule/métal peu favorable), ni sur le plan des criques, car les noyaux de grains de sable agglomérés, trop durs à chaud, contrarient le retrait des pièces. Ces inconvénients se traduisent par de longues heures de réparations par soudure.

Par contre, si l'on utilise un liant composite tel que préconisé par la présente invention, il devient possible d'associer au liant primaire un liant secondaire qui, en donnant de la souplesse à chaud, évitera l'apparition des criques. Le liant secondaire est dans ce cas avantageusement choisi parmi les résines naturelles, les résines synthétiques thermoplastiques, ou encore parmi les talloils dont les teneurs en acides résiniques peuvent être choisies en fonction du but à atteindre.

Cependant, si le liant secondaire ci-dessus défini est ajouté tel quel à la charge de sable, en plus du liant primaire (résine furane ou résine phénolique), la structure rigide de ce dernier reste prédominante et le manque de souplesse à chaud persiste, provoquant ainsi le défaut de criques.

En variante, si le liant secondaire remplace une partie du liant primaire, le résultat de souplesse souhaité peut être atteint, mais les caractéristiques mécaniques du sable des moules ou des noyaux sont alors si faibles, du fait des incompatibilités physiques entre les deux liants qui forment en quelque sorte un mélange hétérogène, que les opérations de moulage et de coulée ne peuvent pas se dérouler correctement, ni sans risque pour la qualité des pièces à réaliser.

Par sa mise en oeuvre, l'invention prend ici toute son importance puisque, à partir du moment où le liant secondaire est correctement modifié, il devient entièrement compatible avec la résine constituant le liant primaire. De ce fait, les qualités agglomérantes du liant composite ainsi formé, qui allie caractéristiques mécaniques et souplesse à chaud, permettent d'éviter les criques des pièces en acier.

D'une manière générale, pour cette application spécifique, le liant secondaire "modifié" est donc une résine ou un talloil émulsifié avec une base minérale (par exemple baryte, chaux, lithine, soude, potasse, ou leurs sels, alcoolates alcalins) ou avec une base organique (par exemple amine, ammoniaque).

Pour exemple, pour obtenir un liant composite destiné à la fonderie de moulage d'acier, on mélange à température ambiante ou à une température ne dépassant pas 50°C environ, de manière à ne pas altérer la résine constituant le liant primaire :
- 65 parties de résine phénolique, type résol, ou de résine furanique,
- 30 parties de talloil à 35 % d'acides résiniques,
- 5 parties de triéthanolamine,
en prenant soin, de préférence, de bien fabriquer le savon de talloil avant d'y introduire la résine phénolique ou furanique.

On obtient alors un liant composite parfaitement homogène, présentant d'excellentes qualités de mouillage vis-à-vis des charges minérales, et apportant au liant primaire (résine phénolique ou furanique) les propriétés absentes recherchées, dues au talloil qui améliore l'état de surface des moules et noyaux réalisés, et, par suite, celui des pièces coulées.

En outre, la présence des acides résiniques du talloil permet d'éviter le défaut de criques qui est présent à coup sûr lorsque l'on utilise la seule résine phénolique ou furanique car, pour être thermoplastiques, les acides résiniques donnent une certaine souplesse à chaud au noyau formé de la masse de grains de sable agglomérés par le liant composite répondant à la formule donnée ci-dessus.

### Exemple 2 :

Pour second exemple, toujours pour obtenir un liant composite destiné à la fonderie de moulage d'acier, on réalise un mélange de :
- 65 parties de résine phénolique, type résol, ou de résine furanique,
- 30 parties de colophane,
- 5 parties de triéthanolamine.

Ce mélange donne les mêmes résultats sur le plan de la qualité des pièces coulées, mais avec encore une plus grande souplesse à chaud apportée par la thermoplasticité de la colophane. Une telle thermoplasticité permet alors de résoudre le défaut de criques dans les aciers alliés et fortement alliés qui sont réputés être encore plus sensibles que les aciers ordinaires à ce type de défaut.

### Exemple 3 :

En fonderie, pour la coulée de pièces de fonte, on sait que, quels que soient les liants utilisés (résines furanes, phénoliques, uréthanes, époxy ou acryliques), lesdits liants sont toujours en proportions trop faibles pour produire un dégagement carboné suffisant et pour assurer à eux seuls le bel aspect des pièces coulées, d'où la nécessité exposée en préambule de passer une couche d'un enduit réfractaire qui, un peu à la manière d'une peinture, évite l'aspect granuleux en surface de la pièce coulée. Des additions de liants secondaires hydrocarbonés riches en carbone, commercialisés sous la marque "Conradson", seraient de nature à résoudre le problème. Malheureusement une incompatibilité de nature entre ces liants hydrocarbonés et les résines employées rend obligatoire l'emploi des liants hydrocarbonés en quantités importantes, et les dégagements gazeux qui s'ensuivent lors de la coulée rendent une telle pratique impossible, à la fois pour des questions d'environnement et pour des risques de défauts sur pièces occasionnés par les accumulations de gaz à certains endroits des moules.

Ici encore, la modification par saponification du liant secondaire hydrocarboné d'origine avec une base appropriée permet alors son émulsification avec le liant primaire traditionnel et donne au liant composite ainsi réalisé des propriétés de mouillage de la charge siliceuse telles que les quantités de liant hydrocarboné nécessaires pour obtenir de belles pièces, sans avoir à passer de couche d'enduit sur les moules et noyaux, sont fortement réduites. Le dégagement gazeux nuisible est bien sûr lui aussi réduit d'autant.

Pour exemple, un excellent liant composite permettant de couler des pièces de fonte sans interposition d'une couche d'enduit réfractaire est obtenu en mélangeant à 60/70°C :
- 60 parties de résine furanique à 70 % d'alcool furfurylique, ou de résine phénolique type résol,
- 35 parties de brai mou distillant entre 300 et 360°C, et riche en carbone "Conradson",
- 5 parties de morpholine.

### Exemple 4 :

Pour la fonderie de fonte, on obtient par exemple un autre liant composite par mélange à 50°C de :
- 70 parties de résine furanique à 70 % d'alcool furfurylique et 30 % de résine urée-formol, ou de résine phénolique, type résol,
- 26 parties d'huile de lin,
- 4 parties de triisopropanolamine,
en prenant soin de bien fabriquer le savon d'huile de lin par saponification avant d'y introduire les résines constituant le liant primaire de base approprié à la charge de sable à agglomérer.

On obtient alors un liant composite présentant les avantages des résines furaniques, mais possédant en plus un meilleur mouillage des charges minérales (sable, zircon, chamotte, par exemple) et donnant aux pièces coulées un aspect très amélioré grâce à la présence de l'huile de lin qui, durant la coulée, se transforme en carbone venant faire un écran protecteur à l'interface moule/métal.

### Exemple 5 :

Pour la fonderie de fonte, des résultats intéressants du point de vue de la qualité des pièces coulées sans couche d'enduit sont également obtenus en mélangeant à 50/60°C :
- 70 parties de résine phénolique ou furanique,
- 26,5 parties d'huile de sardine hydrogénée,
- 3,5 parties de diisopropanolamine.

Ce liant composite donne des qualités de pièces coulées sensiblement identiques à celles obtenues dans l'exemple n° 4.

### Exemple 6 :

Toujours pour la fonderie de fonte, un liant composite particulièrement intéressant du point de vue de la qualité des pièces coulées est obtenu en mélangeant :
- 65 parties de résine phénol-urée-furane à 65 % d'alcool furfurylique,
- 22 parties de maléate de talloil estérifié par le pentaérythritol,
- 10 parties de résine de coumarone-indène,
- 3 parties de triéthanolamine.

Ce liant composite fournit en effet, au moment de la coulée, un dégagement carboné progressif qui forme un écran gazeux à faible pression à l'interface moule/métal, ce qui assure un bel aspect de surface des pièces, même sans passage de couche.

Il est à noter que ce liant composite a pour particularités :
- d'être formé d'un liant primaire et de deux liants secondaires, dont au surplus l'un a été modifié par estérification avant d'être modifié par saponification,
- d'être finalement modifié par saponification à l'aide d'une relativement faible quantité de triéthanolamine.

### Exemple 7 :

En fonderie de fonte et d'acier, l'usage des résines de type polyuréthane est assez répandu. Cependant, à l'exception des pièces minces, l'application d'une couche d'enduit est tout aussi indispensable. Un liant composite comprenant :
- 40 parties de résine high-ortho phénolique,
- 40 parties d'isocyanate,
- 18 parties de talloil,
- 2 parties de diisopropanolamine,
donnera des pièces, même massives, présentant de bonnes qualités de surface sans l'utilisation d'un enduit.

### Exemple 8 :

En fonderie de fonte et d'acier, on sait aussi que l'usage des liants silicatés, produits très hydroscopiques, est en régression du fait des mauvaises caractéristiques de débourrage des noyaux et de la reprise d'humidité de ceux-ci. Or, l'emploi de silicate est intéressant dans la mesure où il permet de durcir la masse granuleuse après agglomération de ses grains par un courant de gaz carbonique CO². Il a été constaté, conformément à l'invention, que l'addition au liant primaire d'un liant secondaire modifié et approprié permet de limiter la quantité de silicate, tout en conservant tous les avantages de ce liant primaire, et en particulier celui de durcir par un courant de CO², et de surcroît en apportant les caractéristiques mécaniques complémentaires nécessaires ainsi qu'une protection contre la reprise d'humidité et une meilleure destruction après la coulée.

Un mélange conforme à l'invention et utilisable dans un tel procédé de durcissement par CO² est obtenu en mélangeant :
- 70 parties de silicate de soude,
- 27 parties de talloil,
- 3 parties de triéthanolamine.

Ce mélange donne un liant qui réagit bien et rapidement au CO², qui présente un bel aspect de surface sur les moules et noyaux, et qui assure une parfaite résistance au stockage avant coulée, même en ambiance humide, ce qui n'est pas le cas habituellement.

Les pièces coulées présentent un bel aspect de surface grâce à la présence de talloil et, surtout, le débourrage des noyaux est grandement amélioré, alors qu'avec le silicate de soude seul il est très mauvais.

### Exemple 9 :

En fonderie de fonte et d'acier, un autre exemple de liant composite conforme à l'invention, permettant le moulage et le noyautage selon le procédé commercialisé sous la marque "Hardox" qui consiste à agglomérer une charge de grains réfractaires mélangée à un liant et durcie par gazage à l'anhydride sulfureux SO², est remarquable en ce qu'il comprend :
- 80 parties de résine furane à haute réactivité, c'est-à-dire fortement prépolymérisée, ou encore 80 parties de résine époxy ou de résine acrylique,
- 17,45 parties de talloil ou de talloil estérifié par le pentaérythritol ou par la glycérine,
- 2,55 parties de triisopropanolamine.

Ce liant composite permet d'obtenir de très beaux noyaux ou moules, présentant un brillant de surface parfait, améliorant sensiblement l'aspect des pièces coulées, et cela sans avoir recours au passage d'une "couche" quelconque. Ce brillant est dû au fait que la résine furane à haute réactivité (ou la résine époxy, ou la résine acrylique) et le talloil ont tous les deux un fort pouvoir mouillant.

Par ailleurs, un tel liant composite présente un aspect lubrifiant qui facilite le démoulage des moules et noyaux réalisés selon ce procédé ; en outre, il diminue considérablement l'encrassement des outillages (modèles et boites à noyaux), ce qui a pour avantage d'améliorer la productivité.

### Exemple 10 :

En fonderie de fonte, en moulage dit "à vert", ou encore "green sand", utilisé pour la fabrication des petites pièces de grande série, l'usage des sables synthétiques à base d'argile, notamment de bentonite à hauteur de 4 à 6 % en poids par rapport au poids de sable, et d'eau est très répandu. Souvent modifiés par une addition de 0,5 à 1,5 % d'agents stabilisateurs d'humidité, tels que les dextrines, amidons et alginates par exemple, ces sables servent aussi bien en moulage qu'en noyautage. Malgré tout, l'antagonisme consécutif aux caractéristiques de tenue à sec, d'une part, et à la faible humidité nécessaire pour ne pas provoquer des défauts sur les pièces, d'autre part, oblige à des compromis qui sont rarement satisfaisants. Ainsi, il est fréquemment utilisé des additifs carbonés solides, sous forme de houille pulvérisée ou de brai de pétrole par exemple, pour apporter aux liants primaires le dégagement carboné nécessaire à la réalisation de belles pièces, sans couche d'enduit intermédiaire.

Toutefois, si, conformément à l'invention, on ajoute de 0,3 à 1,5 % d'un liant secondaire modifié au liant primaire (argile naturelle, ou bentonite additionnée ou non d'un amylacé), il est possible de mieux encore enrober le sable, avec moins d'eau, et d'obtenir ainsi des pièces d'une parfaite qualité, ce que ne permettent pas les compromis classiques (si le sable est régénéré au lieu d'être neuf, et donc contient déjà un résidu de liant secondaire modifié, l'addition de 0,05 à 0,2 % de ce liant secondaire sera généralement suffisante).

Par exemple, un mélange comprenant :
- 70 parties de talloil (ou autre huile végétale),
- 24 parties de résine phénolique de type résol,
- 6 parties de potasse,
donne un additif liquide qui, à titre de liant secondaire, remplace avantageusement les additifs carbonés solides et qui présente plusieurs avantages :
a) absence totale de toxicité lors de la coulée des pièces, à la différence de la toxicité des coulées selon les techniques anciennes due au fait que le brai de pétrole et la houille pulvérisée dégagent au moment de la coulée du benzopyrène, qui est un produit hautement cancérigène,
b) présentation liquide, donc facile à doser, et propre contrairement aux noirs et aux brais en poudre,
c) meilleur mouillage du sable, permettant des taux d'utilisation plus faibles à résultat égal,
d) bel aspect de surface des pièces, avec une meilleure régularité, le dégagement gazeux carboné se faisant beaucoup plus progressivement, donc avec moins de pression, et évitant ainsi les défauts dus aux gaz qui apparaissent souvent en moulage "à vert" lorsque l'addition de produit carboné est un peu trop forte.

Curieusement, le liant secondaire correspondant à la formulation exprimée ci-dessus donne également des résultats techniques très intéressants en fonderie d'acier. En effet, d'une part les propriétés mouillantes de cet additif améliorent le "serrage", donc l'aspect de surface des moules (ce qui se retrouvera sur la surface de la pièce coulée), et d'autre part le dégagement gazeux est si progressif lors de la coulée qu'il ne réagit pas avec le métal liquide, mais constitue seulement un "écran" qui protège le sable du métal, donnant ainsi des pièces d'une qualité et d'un aspect très nettement améliorés.

### Exemple 11 :

Pour la fabrication des masses de bouchage pour trous de coulée de hauts fourneaux, on sait que les liants primaires traditionnels à base de goudron de houille, utilisés à fort pourcentage, présentent de tels risques de pollution et de toxicité que les règlementations de différents pays prévoient leur interdiction.

On a vu qu'il a été proposé de remplacer le liant à base de goudron par des liants à base de résines diverses et en particulier de résines formo-phénoliques.

Cette nouvelle technique, quelles que soient les résines de substitution employées, préconise toujours une addition de 12 à 15 % de liant primaire pour atteindre le résultat désiré avec, en corollaire, une addition de solvants et de plastifiants qui ajoutent des matières volatiles.

En revanche, par application de la présente invention, il devient possible d'obtenir une masse de bouchage très riche en matières réfractaires et ne comportant que 6 à 10 % de liant composite (primaire + secondaire).

A titre d'exemple, un excellent liant composite pour masse de bouchage pour haut fourneau est obtenu en émulsionnant :
- 52 parties de résine furanique, ou de résine phénolique type résol,
- 40 parties de talloil,
- 8 parties de potasse.

Le liant composite comprenant une résine furane et le savon de talloil, obtenu par saponification du talloil par la potasse, donne les caractéristiques mécaniques recherchées avec moitié moins de liant et sans autre addition de solvant, de plastifiant ou d'agent mouillant.

Autrement dit, la masse réfractaire ainsi réalisée avec 6 à 10 % du liant composite conforme à l'invention possède toutes les qualités requises, à savoir :
a) facilité d'extrusion,
b) bonne tenue à la chaleur jusqu'à 120/130°C,
c) prise rapide au-delà de 200°C assurant une meilleure productivité du haut fourneau,
d) force de liaison élevée à haute température,
e) absence de poches gazeuses nuisibles,
f) environnement sain grâce à la suppression des émissions volatiles nuisibles et toxiques,
g) bonne résistance à l'érosion par la fonte liquide et le laitier,
h) conservation de la masse au stockage prolongée de plusieurs mois.

Toutes ces qualités, souvent contradictoires, sont apportées par :
- le pouvoir mouillant et émulsifiant particulièrement efficace du liant secondaire modifié (en l'occurrence le savon de talloil) qui permet de diminuer de moitié la quantité totale de liant,
- le choix d'un liant secondaire modifié ne renfermant aucune substance toxique à froid comme à chaud,
- la parfaite compatibilité entre le liant primaire et le liant secondaire modifié, laquelle permet d'enrober convenablement la masse réfractaire avec très peu de liant, tout en lui donnant une plasticité exemplaire et qui reste constante durant tout le stockage de la masse du fait qu'il n'est pas nécessaire d'avoir recours à l'usage d'un solvant.

### Exemple 12 :

Une autre masse de bouchage pour trous de coulée de hauts fourneaux, répondant excellement aux nouvelles normes d'hygiène imposées, peut être obtenue en utilisant une résine phénolique additionnée d'un savon de talloil et, éventuellement, d'un savon de brai de talloil.

Normalement, selon la technique classique décrite dans les brevets FR-A-2.232.596 et FR-A-2.353.642, les liants primaires résineux, et principalement la résine phénolique, sont utilisés à raison de 10 à 15 % (éventuellement en combinaison avec d'autres liants secondaires qui n'ont subi aucune modification conforme à l'invention), introduisant par là-même des quantités importantes de phénol libre qui présente, tant à froid qu'à chaud, une certaine toxicité, bien que moindre que celle des goudrons.

Par contre, en mettant en oeuvre la présente invention, il est possible d'incorporer, en tant que liant primaire, des quantités de résine phénolique très faibles, de l'ordre de 3 à 6 % en poids relativement à la charge, tout en obtenant, grâce au liant secondaire modifié, ajouté en quantité de l'ordre de 1 à 6 % en poids relativement à la charge, les qualités techniques désirées. L'utilisation de résine phénolique devient alors totalement inoffensive pour les utilisateurs.

De plus, dans le cas de l'emploi d'une résine phénolique de type résol, qui donne généralement les résultats les plus convaincants à quantité égale, la technique utilisée conformément à la présente invention apporte un avantage supplémentaire.

En effet, les résols ont le regrettable défaut de mal se conserver dans le temps, et par conséquent la durée de vie des masses de bouchage préparées avec ce type de résine est très limitée dans le temps. Avec l'utilisation d'un liant secondaire modifié et approprié, tel l'un de ceux préconisés dans la présente invention, il devient facile d'obtenir des durées de conservation de l'ordre de plusieurs mois.

Ainsi, un liant composite pour masse de bouchage pour haut fourneau est obtenu en mélangeant :
- 62 parties de résine phénolique type résol,
- 33 parties d'huile de maïs,
- 5 parties de triéthanolamine.

Ce liant composite, additionné aux réfractaires habituels servant à confectionner les masses de bouchage (argile, alumine, silice, carbure de silicium, chamotte, graphite, par exemple), est utilisé en remplacement de l'habituel goudron avec un temps de durcissement amélioré, une excellente résistance mécanique et chimique au laitier.

A titre indicatif, lorsqu'il est utilisé 25 % de goudron pour agglomérer une certaine masse, il sera utilisé de 12 à 15 % de résine phénolique classique, plus des liants secondaires non compatibles avec cette résine, par application d'une des techniques préconisées selon les brevets FR-A-2.232.596 ou FR-A-2.353.642.

Compte tenu des excellentes qualités de mouillage et filmogènes du liant composite proposé ci-dessus, vis-à-vis des charges réfractaires utilisées, une addition de 4 à 10 % de ce liant composite est suffisante.

Ce liant est par ailleurs totalement non toxique, contrairement aux goudrons et aux résines phénoliques utilisés à fort pourcentage.

De plus, la conservation de la masse au stockage se trouve prolongée de plusieurs mois comparativement à celle d'une masse mélangée à une résine phénolique classique sans liant secondaire approprié.

### Exemple 13 :

En fonderie, comme en réfractaire pour la fabrication de masses de bouchage, un liant composite très polyvalent sera obtenu en émulsionnant :
- 60 parties de résine furane ou phénolique,
- 35 parties de talloil à 25/30 % d'acides résiniques,
- 5 parties de lithine (hydrate de lithium).

Il sera toujours préférable de fabriquer le savon alcalin lithine-talloil avant d'introduire la résine, ceci afin d'obtenir une homogénéité parfaite entre les deux composants.

Un tel liant composite présente des qualités de mouillage excellentes sur les différentes charges réfractaires (alumine, bauxite, carbone, corindon, magnésie, mullite, nitrure, silice, silicate de zirconium, par exemple) ou encore métalliques (chromite, grenaille métallique, oxyde de fer, par exemple).

### Exemple 14 :

Dans la fabrication des briques réfractaires ou des pisés synthétiques, les différents liants composites décrits dans les exemples 1 à 13 apportent dans tous les cas des qualités de mouillage très supérieures à celles que peut apporter une résine seule ou un silicate alcalin ou organique.

Ces qualités de mouillage se retrouvent, quelle que soit la nature de la charge réfractaire (acide, neutre ou alcaline).

Selon les résistances mécaniques imposées par les applications particulières envisagées, de tels briques ou pisés seront réalisés avec une addition allant de 3 à 30 % du liant composite, ledit pourcentage étant directement lié à la finesse de grain du réfractaire ou du mélange de réfractaires utilisés, ainsi qu'à la réaction chimique propre à leur nature, ceci en particulier avec les charges réfractaires alcalines.

Toutefois, ce pourcentage sera toujours inférieur à celui qui aurait été utilisé avec la même résine primaire, sans l'addition du savon formé par le liant secondaire.

Ainsi, un pisé composé principalement de 88 parties de silice et de 12 parties de carbone sera lié avec 10 à 12 % de liant composite conforme à l'invention, alors que la résine primaire seule aurait dû, selon les techniques actuelles, être utilisée selon une quantité de l'ordre de 15 et 20 % pour obtenir la même agglomération, mais ceci avec davantage de fumées, dues à la combustion du liant, et avec un coût plus élevé.

### Exemple 15 :

Grâce à la mise en oeuvre de l'invention, une autre application devient possible dans la fabrication de briques et de pisés. Dans ces utilisations, il devient de plus en plus fréquent d'utiliser des résines phénoliques de type novolaque en solution dans de l'alcool furfurylique. Malheureusement, de tels mélanges restent réservés à des applications particulières du fait de leur coût élevé.

Ils voient désormais leurs possibilités s'élargir avec la présente invention, et ceci pour deux raisons :
- la résine novolaque, seule utilisable jusqu'alors du point de vue conservation, peut être remplacée par une résine de type résol plus efficace en moindre pourcentage,
- le liant secondaire modifié apporte des qualités de mouillage des charges réfractaires alcalines (magnésie ou autre) telles que la quantité de liant globale nécessaire devient des plus raisonnable et économique.

Dans la plupart des exemples précités, il a été proposé de réaliser le savon, c'est-à-dire le liant secondaire, séparément et préalablement à son mélange avec le liant primaire. Ce mode de réalisation n'est toutefois aucunement limitatif. Ainsi, dans tous les cas où la résine du liant primaire est du type à condensation alcaline (phénolique, urée formol, furanique par exemple), c'est-à-dire pour simplification la quasi totalité des résines à l'exception des novolaques, il est également possible d'utiliser le liant secondaire comme agent de condensation lors de la fabrication du liant primaire : le liant composite constitué "de la résine à condensation alcaline, du produit carboné saponifiable et de la base" est alors réalisé en une seule opération.

Quant à l'introduction du liant secondaire dans la masse à durcir, il est bien clair qu'elle peut se faire :
- soit en ajoutant ledit liant secondaire à la masse de la charge et du liant primaire, avant durcissement de la charge,
- soit en ajoutant ledit liant secondaire au liant primaire avant son mélangeage à la charge, lors de la fabrication dudit liant primaire ainsi qu'il vient d'être vu, pour former en une seule opération le liant composite, ou après fabrication séparée dudit liant primaire,
- soit en ajoutant ledit liant secondaire à la charge avant l'incorporation du liant primaire, ou encore pendant ladite incorporation, cette fois encore le liant primaire ayant été fabriqué séparément du liant secondaire ou en même temps pour, ainsi qu'il vient d'être vu, former en une seule opération le liant composite.

## Revendications

1. Composition réfractaire, prête au durcissement à froid ou à chaud, du type comprenant : a) une charge de grains minéraux réfractaires à hautes caractéristiques mécaniques, par exemple de silice, d'alumine, de carbone, b) au moins un liant primaire ou principal, de type thermodurcissable, ou de type argile ou de type silicate, pour agglomérer entre eux les grains de ladite charge, approprié en conséquence à ladite charge, et c) au moins un liant secondaire destiné à améliorer et/ou à corriger les défauts du liant primaire, ladite composition étant notamment destinée à la fabrication de moules et de noyaux pour la fonderie, à la fabrication de briques et de pisés et à la fabrication de masses de bouchage pour trous de coulée de hauts fourneaux, et étant caractérisée en ce que le liant secondaire est obtenu par saponification d'un produit carboné présentant un indice d'acide suffisant pour être modifiable par saponification, ledit liant secondaire, par ses propriétés émulsifiantes propres, étant ainsi rendu compatible avec le liant primaire thermodurcissable, ou de type argile ou de type silicate.

2. Composition réfractaire selon la revendication 1, caractérisée en ce que le produit carboné modifiable par saponification est choisi parmi les résines naturelles ou synthétiques, et/ou parmi les huiles végétales, animales ou synthétiques, et/ou parmi les acides gras ou les acides résiniques desdites huiles.

3. Composition réfractaire selon l'une des revendications 1 et 2, caractérisée en ce que l'indice d'acide du produit carboné modifiable par saponification est compris entre 40 et 300.

4. Composition réfractaire selon l'une des revendications 1 à 3, caractérisée en ce que le produit carboné a été estérifié, préalablement à l'opération de saponification.

5. Composition réfractaire selon l'une des revendications 1 à 4, caractérisée en ce que le liant secondaire constitue en poids entre 10 et 60 % du liant composite (primaire(s) + secondaire(s)).

6. Liant composite destiné à agglomérer entre eux les grains d'une charge de grains minéraux réfractaires à hautes caractéristiques mécaniques, par exemple de silice, d'alumine, de carbone, ledit liant composite comprenant en mélange au moins un liant primaire ou principal, de type thermodurcissable, ou de type argile ou de type silicate, approprié à la charge à agglomérer, et au moins un liant secondaire, caractérisé en ce que ledit liant secondaire est obtenu par saponification d'un produit carboné présentant un indice d'acide suffisant pour être modifiable par saponification, ledit liant secondaire, par ses propriétés émulsifiantes propres, étant ainsi rendu compatible avec le liant primaire thermodurcissable, ou de type argile ou de type silicate.

7. Liant composite selon la revendication 6, caractérisé en ce que le produit carboné modifiable par saponification, constituant après saponification le liant secondaire, est choisi parmi les résines naturelles ou synthétiques, et/ou parmi les huiles végétales, animales ou synthétiques, et/ou parmi les acides gras ou les acides résiniques desdites huiles.

8. Procédé de fabrication d'un liant composite selon l'une des revendications 6 et 7, caractérisé en ce que le produit carboné modifiable par saponification, constituant après saponification le liant secondaire, est utilisé en substitution totale ou partielle de l'agent de condensation normalement utilisé dans l'élaboration d'une résine de condensation alcaline destinée à constituer le liant primaire, et conduisant ainsi à la création d'un type nouveau de liant hybride mais homogène, aux caractéristiques nouvelles et aux propriétés mouillantes améliorées.

9. Procédé de préparation, en vue de son durcissement, d'une composition réfractaire du type comprenant : a) une charge de grains minéraux réfractaires à hautes caractéristiques mécaniques, par exemple de silice, d'alumine, de carbone, b) au moins un liant primaire ou principal, de type thermodurcissable, ou de type argile ou de type silicate, approprié à l'agglomération des grains de la charge en question, et c) au moins un liant secondaire destiné à améliorer et/ou à corriger les défauts du liant primaire, ladite composition étant notamment destinée à la fabrication de moules et de noyaux pour la fonderie, à la fabrication de briques et de pisés et à la fabrication de masses de bouchage pour trous de coulée de hauts fourneaux, ledit procédé étant caractérisé en ce que l'on ajoute, soit à la masse de la charge et du liant primaire, avant durcissement de la charge, soit au liant primaire avant son mélangeage à la charge, soit à la charge avant ou pendant l'incorporation du liant primaire, un liant secondaire obtenu par saponification d'un produit carboné présentant un indice d'acide suffisant pour être modifiable par saponification, ledit liant secondaire, par ses propriétés émulsifiantes propres, étant ainsi rendu compatible avec le liant primaire.

## Patentansprüche

1. Feuerfeste Zubereitung, fertig zum Kalt- oder Warmhärten, enthaltend:
a) eine Charge aus mineralischen, feuerfestem Korn hoher mechanischer Eigenschaften, beispielsweise aus Kieselerde, Tonerde, Kohlenstoff, b) wenigstens ein Primär- oder Hauptbindemittel vom thermohärtbaren, Ton- oder Silikattyp zum Agglomerieren des Korns der Charge und daher an die Charge angepaßt, und c) wenigstens ein sekundäres Bindemittel zum Verbessern und/oder Korrigieren von Defekten des Primärbindemittels, wobei die Zubereitung insbesondere für die Herstellung von Gießformen und Gießkernen, für die Herstellung von Ziegeln und Stampfmassen und für die Herstellung von Verschlußmassen für Auslauföffnungen von Hochöfen bestimmt ist, **dadurch gekennzeichnet**, daß das sekundäre Bindemittel durch Verseifung eines kohlenstoffhaltigen Produkts hergestellt ist, das einen Säurewert hat, der ausreichend ist, um durch Verseifung modifizierbar zu sein, wobei das sekundäre Bindemittel aufgrund seiner geeigneten Emulgiereigenschaften auf diese Weise mit dem thermohärtbaren oder Ton- oder Silikat-Bindemittel kompatibel gemacht ist.

2. Feuerfeste Zubereitung nach Anspruch 1, dadurch gekennzeichnet, daß das durch Verseifung modifizierbare, kohlenstoffhaltige Produkt ein Natur- oder Kunstharz und/oder ein pflanzliches, tierisches oder synthetisches Öl und/oder eine Fettsäure oder eine Resinosäure der genannten Öle ist.

3. Feuerfeste Zubereitung nach einem der Ansprüche 1 und 2, dadurch gekennzeichnet, daß der Säurewert des durch Verseifung modifizierbaren, kohlenstoffhaltigen Produkts zwischen 40 und 300 liegt.

4. Feuerfeste Zubereitung nach einem der Ansprüche 1 bis 3, dadurch gekennzeichnet, daß das kohlenstoffhaltige Produkt vor dem Verseifungsvorgang verestert worden ist.

5. Feuerfeste Zubereitung nach einem der Ansprüche 1 bis 4, dadurch gekennzeichnet, daß das sekundäre Bindemittel 10 bis 60 Gewichtsprozent des zusammengesetzten (primären + sekundären) Bindemittels ausmacht.

6. Zusammengesetztes Bindemittel für die Agglomerierung von Körnern einer Charge mineralischer, feuerfester Körner hoher mechanischer Eigenschaften, beispielsweise aus Kieselerde, Tonerde und Kohlenstoff, bestehend aus einer Mischung wenigstens eines Primär- oder Hauptbindemittels vom thermohärtbaren, Ton- oder Silikattyp, das an die zu agglomerierende Charge angepaßt ist, und wenigstens eines sekundären Bindemittels, dadurch gekennzeichnet, daß das sekundäre Bindemittel durch Verseifung eines kohlenstoffhaltigen Produkts erhalten ist, das einen Säurewert aufweist, der für die Modifizierung durch Verseifung ausreichend ist, wobei das sekundäre Bindemittel aufgrund seiner geeigneten Emulgiereigenschaften mit dem primären Bindemittel vom thermohärtbaren oder Ton- oder Silikattyp kompatibel gemacht ist.

7. Zusammengesetztes Bindemittel nach Anspruch 6, dadurch gekennzeichnet, daß das durch Verseifung modifizierbare, kohlenstoffhaltige Produkt, das nach Verseifung das sekundäre Bindemittel bildet, ein Natur- oder Kunstharz und/oder ein pflanzliches, tierisches oder synthetisches Öl und/oder eine Resinosäure der genannten Öle ist.

8. Verfahren zum Herstellen eines zusammengesetzten Bindemittels nach einem der Ansprüche 6 und 7, dadurch gekennzeichnet, daß das durch Verseifung modifizierbare, kohlenstoffhaltige Produkt, das nach Verseifung das zweite Bindemittel bildet, als vollständiger oder teilweiser Ersatz des Kondensationsmittels verwendet wird, das normalerweise bei der Herstellung eines alkalischen Kondensationsharzes verwendet wird, das dazu bestimmt ist, das primäre Bindemittel zu bilden, und das zur Erzeugung einer neuen Art hybriden, aber homogenen Bindemittels mit neuen Eigenschaften und verbesserten Benetzungseigenschaften führt.

9. Verfahren zum Herstellen einer feuerfesten Zusammensetzung unter Berücksichtigung seiner Aushärtung, enthaltend: a) eine Charge mineralischen, feuerfesten Korns hoher mechanischer Eigenschaften, beispielsweise aus Kieselerde, Tonerde, Kohlenstoff, b) wenigstens ein Primär- oder Hauptbindemittel vom thermohärtbaren, Ton- oder Silikattyp, das zur Agglomerierung der Körner der fraglichen Charge geeignet ist, und c) wenigstens ein sekundäres Bindemittel, das dazu bestimmt ist, Defekte des primären Bindemittels zu beseitigen und/oder zu korrigieren, wobei die Zusammensetzung insbesondere zur Herstellung von Gießformen und -kernen, zur Herstellung von Ziegeln und Stampfmassen und zur Herstellung von Verschlußmassen für die Auslauföffnungen von Hochöfen bestimmt ist, dadurch gekennzeichnet, daß man entweder der Masse der Charge und des primären Bindemittels vor dem Aushärten der Charge oder dem Primärbindemittel vor seiner Einmischung in die Charge oder der Charge vor oder während dem Versetzen mit dem Primärbindemittel ein zweites Bindemittel hinzufügt, das man durch Verseifung eines kohlenstoffhaltigen Produkte erhält, das einen Säurewert hat, der ausreichend ist, um durch Verseifung modifizierbar zu sein, wobei das sekundäre Bindemittel aufgrund seiner geeigneten Emulgiereigenschaften auf diese Weise mit dem Primärbindemittel kompatibel gemacht wird.

## Claims

1. A refractory composition, ready for cold or hot hardening, of the type comprising: a) a load of refractory mineral grains with high mechanical characteristics for example of silica, alumina, or carbon, b) at least one primary or principal binder of thermohardening type, or clay type, or silicate type, appropriate to the load, for binding together the grains of the load, and c) at least one secondary binder intended to alleviate and/or correct the deficiencies of the primary binder, the said composition being particularly intended for the production of foundry moulds and cores, the production of bricks and of walls and the production of sealing plugs for tapping holes of high furnaces, and being characterised in that the secondary binder is obtained by saponification of a carbonaceous product having an acid value sufficient to be able to be modified by saponification, the said secondary binder, by its own emulsifying properties, thus being rendered compatible with the primary thermohardening or clay type or silicate type binder.

2. A refractory composition according to claim 1, characterised in that the carbonaceous product modified by saponification is chosen from natural or synthetic resins, and/or from vegetable, animal or synthetic oils, and /or from fatty acids or acid resins of the said oils.

3. A refractory composition according to claim 1 or claim 2, characterised in that the acid value of the carbonaceous product modified by saponification is between 40 and 300.

4. A refractory composition according to claim 1, claim 2 or claim 3, characterised in that the carbonaceous product has been esterified preliminarily to the operation of saponification.

5. A refractory composition according to any one of claims 1 to 4, characterised in that the secondary binder constitutes between 10% and 60% by weight of the combined binder (primary + secondary).

6. A composite binder intended for binding the grains of a load of refractory mineral grains with high mechanical characteristics for example of silica, alumina, or carbon, the said composite binder comprising as a mixture at least one primary or principal binder of thermohardening type, or clay type, or silicate type, appropriate to the load to be bound, and at least one secondary binder, characterised in that the said secondary binder is obtained by saponification of a carbonaceous product having an acid value sufficient to be able to be modified by saponification, the said secondary binder, by its own emulsifying properties, thus being rendered compatible with the primary thermohardening or clay type or silicate type binder.

7. A composite binder as claimed in claim 6, characterised in that the carbonaceous product modified by saponification, constituting after saponification the secondary binder, is chosen from natural or synthetic resins, and/or from vegetable, animal or synthetic oils, and /or from fatty acids or acid resins of the said oils.

8. A method of production of a composite binder according to claim 6 or claim 7, characterised in that the carbonaceous product modified by saponification, constituting after saponification the secondary binder, is utilised in complete or partial substitution of the condensation agent normally used in the production of an alkaline condensation resin intended to constitute the primary binder, and thus leading to the creation of a new type of hybrid but homogeneous binder, with new characteristics and improved absorptive properties.

9. A method of preparation, with a view to its hardening, of a refractory composition of the type comprising: a) a load of refractory mineral grains with high mechanical characteristics for example of silica, alumina, or carbon, b) at least one primary or principal binder of thermohardening type, or clay type, or silicate type, appropriate to the binding of the grains of the load in question and c) at least one secondary binder intended to alleviate and/or correct the deficiencies of the primary binder, the said composition being particularly intended for the production of foundry moulds and cores, the production of bricks and of walls and the production of sealing plugs for tapping holes of high furnaces, the said method being characterised in that there is added, either to the mass of the load and of the primary binder, before hardening of the load, or to the primary binder before its mixing to the load, or to the load before or during the incorporation of the primary binder, a secondary binder obtained by saponification of a carbonaceous product having an acid value sufficient to be able to be modified by saponification, the said secondary binder, by its own emulsifying properties, being thus rendered compatible with the primary binder.
